# EUROPEAN PATENT SPECIFICATION

(11) **EP 1 737 289 B1**
(45) Date of publication and mention of the grant of the patent: **13.04.2016**
(21) Application number: 05736336.8
(22) Date of filing: 14.04.2005
(51) Int. Cl.: A01G 23/081

(54) **ARRANGEMENT IN WOOD HANDLING DEVICE**
ANORDNUNG IN EINER HOLZBEARBEITUNGSVORRICHTUNG
CONFIGURATION D'UN DISPOSITIF DE MANIPULATION DU BOIS

(30) Priority: 16.04.2004 FI 20040547
(43) Date of publication of application: 03.01.2007
(73) Proprietor: Ponsse Oyj, 74200 Vieremä (FI)
(72) Inventor: RÖNKKÖ, Väinö, FI-74120 Iisalmi (FI); RÖNKKÖ, Veijo, FI-74170 Soinlahti (FI)
(74) Representative: Kolster Oy Ab
(86) International application number: PCT/FI2005/050120
(87) International publication number: WO 2005/099438

(56) References cited:
- EP-A1- 0 437 803
- CA-A1- 1 221 006
- CA-A1- 1 252 025
- FI-A- 771 399
- US-A- 3 795 264
- US-A- 4 221 245
- US-A- 4 540 033
- US-A- 4 793 389
- US-A- 4 848 425
- US-A- 5 004 026

## Description

### BACKGROUND OF THE INVENTION

The present invention relates to an arrangement in a wood handling device in accordance with the preamble of claim 1.

The arrangement is particularly intended for connecting a cutting device to a working device arranged in a boom of a forest machine.

One of the biggest challenges of contemporary silviculture is mechanical harvesting of small-stem thinning areas such that it is economically profitable. A recent trend has led to a situation wherein in connection with small-stem forests, instead of previous timber and paper industry products, it is now considered efficient in terms of overall economics to use small-stem trees e.g. for producing thermal or electric energy. Wood used for such a purpose is thus called 'energy wood'. In order to achieve as large an energy yield as possible, it is appropriate to harvest e.g. an entire tree including its branches which is eventually to be chipped or crushed by using e.g. an energy wood grapple, as distinct from a harvesting manner implemented in a known manner by harvesting merchantable wood by a delimbing harvester head. When a tree trunk is delimbed in the forest, a considerable portion of the energy content being released when burning an entire tree remains in the terrain, where it mostly contributes to increasing the amount of nutrients in the soil. In many cases, however, the soil is nutritious enough and the importance of this waste matter called felling waste is practically non-existent.

In order to make harvesting small energy wood trees efficient enough, it has also been noted that it should be possible for an energy wood grapple also allow a 'group harvesting principle' to be applied, meaning that an energy wood grapple designed for energy wood harvesting should enable collection of a plurality of separate entire tree trunks which, as a single bundle, can then be loaded either directly into a cargo space of a harvester or at the roadside of a clearing road for a separate short distance transportation. Typically, it is possible to collect e.g. ten individual tree trunks, held by the gripping members of an energy grapple, which improves the working efficiency considerably as the movements of the boom moving the energy grapple become shorter. It is thus not necessary after each trunk to bring the boom to the cargo space or to a place where the trunks are left for a separate short distance transportation to be taken place later.

Several different harvester head solutions are known which are thus designed substantially for felling, delimbing and cutting a tree trunk to be handled into pieces of a desired length. Often such a harvester head also measures the pieces of wood at least for length and thickness information. One such harvester head movable by booms of a wood handling machine is disclosed in publication WO 97/17834. The structure of many known solutions is, however, complex and expensive, which is another reason why they are not suitable for harvesting less valuable energy wood. Harvester heads are usually also unnecessarily heavy-duty for harvesting small trunks and they are seldom particularly well suited for loading trunks or entire trees.

Various working devices for forestry machines are also previously known that are particularly designed for harvesting energy wood so as to enable the harvesting of energy wood to be mechanized and to make the harvesting of the less valuable energy wood more efficient. From among these different energy wood grapples various cutting devices are known which, however, involve certain problems. Publication FI 111511 discloses a cutting device and connecting the same to a wood handling device. In the manner disclosed therein, the cutting device is implemented by a chainsaw arranged to rotate a steel plate or a blade guide of a desired shape arranged to be substantially immovable with respect to the body of the device. This solution achieves the advantage that it becomes possible to collect more trees into the device such that their butt ends are pressed against the blade plate so as to enable re-cutting of the trees to be avoided should they slide downwards e.g. when hold of the gripping means of the device temporarily eases. On the other hand, a problem with the solution is that the device is useless for loading trees from the ground or from a pile since the cutting device extends substantially across the cross-section defined by the gripping means. Similar solutions using sliding cutting blade are shown in US 3,795,264 and US 4,848,425.

### brief description of the invention

An object of the present invention is thus to present an arrangement in a wood handling device so as to provide a novel solution to the aforementioned problems due to drawbacks in the prior art that would enable energy wood in particular to be handled more efficiently. Particularly the present problems are solvable by combining the characteristic features as disclosed in the characterizing part of claim 1.

Preferred embodiments of the invention are disclosed in the dependent claims.

A basic idea underlying the invention is to make thinning of small trees in particular less complicated by means of an arrangement which, in an easy and reliable manner, enables several tree trunks to be handled simultaneously in the same working device.

An arrangement has thus been produced wherein almost any cutting device, in a reliable manner which makes felling easier, is connectable to a harvester head for a forestry machine as well as e.g. to a loading grapple, i.e. a grab, to be used therein, or to a wood handling device enabling group harvesting.

The terms "upwards", "downwards", "above", "underneath" and the like used in the description illustrate features of the invention in directions which are provided with respect to the arrangement in a wood handling device in accordance with the invention as presented in the accompanying drawings.

The invention provides considerable advantages. Thus, when a cutting device is pivotally arranged in the body of a working device of a forestry machine, a loading grapple being used by way of example as such a device in the present description, it is possible to cut bundles of trees of different sizes without a blade cutting trees that have already been cut. This results from a completely novel solution for a joint between the cutting device and the working device. Consequently, when cutting a tree, the cutting device, including the blades therein, emerges, as it were, from behind the body of the working device each time only by the length of the diameter of the tree to be cut. This is achieved such that a die provided in the cutting device presses the tree to be cut towards the body of the working device so that the die pulls the blade (and the rest of the cutting device) towards the die. As a result of the procedure, the die presses the tree against the cutting edge of the blade and cuts therethrough so that the tree that was cut remains resting on the blade, not being allowed to move downwards in the working device, which would interfere with the next cutting procedure.

Since the cutting device, when an open working device is seen from the front (in a direction from which the 'arms' formed by the open gripping members can be seen), is located behind the working device and not on a side thereof, as in some prior art devices, the structure of the working device can be made advantageously narrow. This is considerably advantageous particularly when working in a thick stand since damage caused by the work ing device to other trees which are to be left in the stand can be mainly avoided.

Furthermore, the fact that the structure allows the work ing motion of the cutting device to be directed at the tree trunk to be cut from a side facing the boom of the forestry machine is advantageous since a tree trunk is usually easy to bend by means of the boom of the forestry machine manoeuvring the device during the cutting procedure in the direction of opening of the gripping members, in which case the blade in the cutting device is more easily allowed to penetrate into the tree trunk to be cut, a cutting gap thus opening wider. Tightening the cutting gap being formed in the tree may in a potential opposite situation make the cutting slower and more difficult, requiring, at least, a greater cutting force of the cutting device.

Since the cutting device in accordance with the arrangement of the invention is arranged to be movable with respect to the body of a work-ing device arranged in the boom of a forestry machine, a particular advantage achieved by the arrangement is also that the cutting device, in a loading situation, moves away from a cross-sectional area defined by the gripping members of the working device. This enables the working device to be utilized efficiently in loading trees.

This use intended for loading is also significantly alleviated by a friction joint provided between the working device and the cutting device, which ensures that the cutting device does not enter the cross-sectional area defined by the gripping members during loading, which would interfere with the loading.

On account of its structure and operation, a connecting device connecting the cutting device and the working device does not transmit the torque to the body of the working device on this plane of motion thereof, as a result of which the body of the working device is subjected to fewer stresses than in more conventional solutions. It is thus possible to choose the structural parts of the cutting device and the arrangement connecting the same to a working device to be implemented in a manner lighter than that usually m-ployed. The cutting device may naturally be arranged to be movable with respect to the body of the working device arranged in the booms of a forestry machine also in ways known per se other than that by utilizing a rotating connecting means. Consequently, a connecting means may consist e.g. of a linear guide or guides.

As has been stated above, such an arrangement in a wood handling device is applicable to be used in connection with most different working devices. The cutting device itself may consist of both the device provided with a fixed blade pressing and cutting through a tree that has been descri bed in closer detail in the present embodiment, and a device equipped with one or more movable blades, or even a chainsaw if the size of the energy wood to be produced is larger than normally.

### BRIEF DESCRIPTION OF THE DRAWINGS

In the following, a preferred embodiment of the invention will be described in closer detail with reference to the accompanying drawing, in which
Figure 1 is a schematic, axonometric oblique front view showing an arrangement of the invention wherein gripping means of a working device are open,
Figure 2 is also a schematic, axonometric oblique front view showing an arrangement of the invention when the angle of view has rotated by approximately 90 degrees from that of Figure 1, in which case one of the gripping means of the working device has gripped a tree while the others are open,
Figure 3 is a side view of the arrangement of Figure 1,
Figure 4 is a top view showing the arrangement of Figure 1,
Figure 5 is a bottom view showing the arrangement of Figure 1, and
Figure 6 is an axonometric view showing the arrangement of Figure 1 in a 'loading position'.

### DETAILED DESCRIPTION OF PREFERRED EMBODIMENTS

Some preferred embodiments of the present arrangement in a wood handling device will be described in the following with reference to the aforementioned figures. The arrangement thus comprises structural parts designated in the figures by reference numbers, the structural parts corresponding with the reference numbers used in the present specification.

The arrangement in accordance with the figures relates to a working device which is intended for harvesting energy wood in particular and which is movable by means of booms of a forwarder or a harvester and which is expressly used for harvesting entire trees. Such a working device is often called an 'energy wood grapple'.

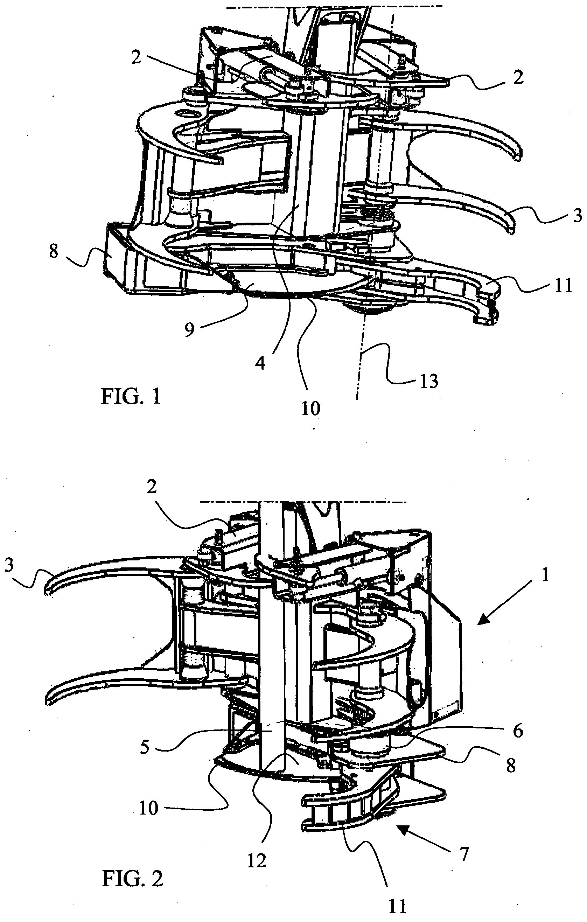

The present working device 1 seldom includes feeding or delimber elements known from conventional cutting heads for forestry machines , although this is not excluded either. The working device in accordance with the present embodiment shown in the figures comprises a set of gripping means 2 and 3 which are movably arranged in a body 4 of the working device. The working device in accordance with the figures comprises first - upper - gripping means 2 which, by a linear and/or turning motion with respect to the body, may be controlled to grip a tree trunk 5 or trunks which, according to Figure 2, during delimbing is/are positioned against the body of the working device positioned substantially in a vertical position. Second - lower - gripping members 3 of the working device are turnably arranged in the body of the working device and may be separately controlled to grip said tree trunk or trunks.

These gripping members of the described kind enable an alternating movement to be achieved which in one working phase enables a plurality of tree trunks 5 to be collected into a bundle in the working device 1. After all, in harvesting energy wood, it is not appropriate to delimb a tree trunk at al I but it is advantageous to leave all branches in the trunk since the branches also give energy.

In order to cut the tree trunk 5 positioned in the working device 1, the working device is by means of special connecting device 6 provided with a cutting device 7 such that it is arranged to be movable with respect to the working device. In the embodiment according to the figures, the working device is e.g. articulated to the working device so as to be turnable on a mounting axle.

Such a cutting device 7 comprises a body 8 provided with a cutting member 9 for cutting a tree trunk. In order to control the movements of the cutting device, a friction element - e.g. a braking surface - is preferably arranged between the bodies of the working device and the cutting device so as to avoid unnecessarily sensitive movement, e.g. winding, of the cutting device during operation. This friction element does, however, allow the cutting device to move in/out in accordance with current operation. When a friction element is used, it may comprise a mechanical structure known per se, such as a meta I plate structure which includes one or more plates, plate structures coated with phenolic resin/rubber based friction material or conical axle solutions.

When necessary, it is possible to arrange a separate actuator, such as a hydraulic cylinder, between the body 8 of the cutting device 7 and the body 4 of the working device to direct the cutting device in a desired manner with respect to the body of the working device. It is, of course, also possible to implement the above-disclosed mechanical friction element by means of hydraulic technology known per se. These are not, however, separately presented in the figures.

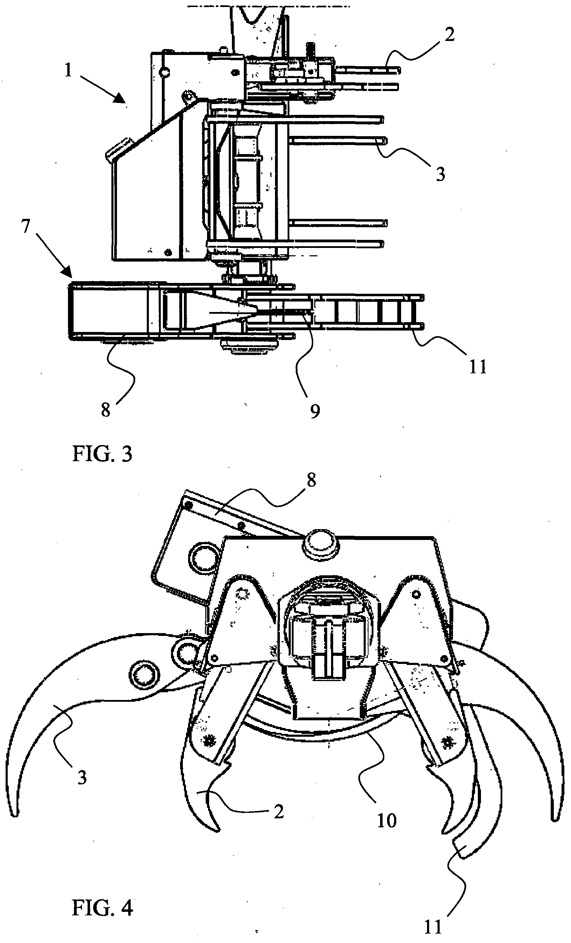

In principle, the present working device 1 and the cutting device 7 arranged therein operate in the following manner. By means of the booms of the forestry machine manoeuvring the working device, the working device is brought at the butt end of a tree trunk 5 to be harvested, in which case the working device is in a position shown by Figures 1 and 4, substantially upright. The working device is used for gripping the tree trunk by means of at least the first gripping means 2 in accordance with Figure 2, whereafter the cutting device is directed to cut the tree trunk. The upper gripping means press the cut tree trunk against the body of the working device and thus enable the lower gripping members 3 to be opened without allowing the previously cut tree trunk to fall off from the working device. By repeating the above-disclosed procedure, it is now possible to collect a desired number of tree trunks in to the working device by alternating the movements of the gripping members 2 and 3, either by manual control or possibly automatically, e.g. as a cycle following the cutting.

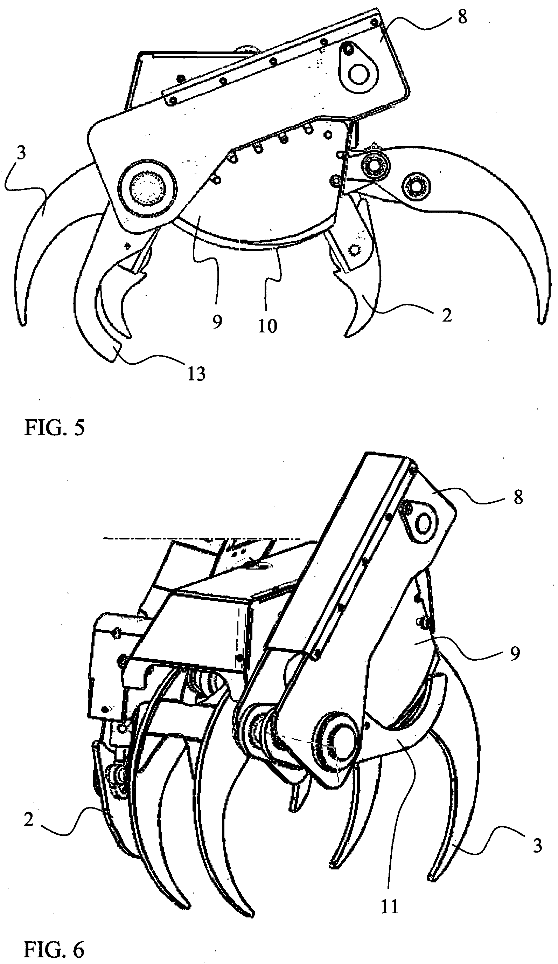

When the working device 1 is provided with a sufficient number of tree trunks 5, this bundle may be further conveyed to a desired position by the working device in the vertical position according to Figure 2, either in the terrain or directly into the cargo space of a forwarder whereto the bundle can be dumped by directing the working device to incline into a substantially horizontal position in accordance with Figure 6.

In its embodiment according to the figures, the cutting device 7 thus comprises a cutting member 9, such as a blade, arranged substantially rigidly in the body 8 of the cutting device. Such a blade in accordance with the present embodiment is most clearly shown in Figure 5. In its initial position, the cutting device is in the position shown by Figure 6, in which case the cutting member has become directed behind the body 4 of the working device, where it takes shelter. In this position, the cutting device 10 in the cutting member, the cutting edge in accordance with the figures or, for instance, a saw chain for a chainsaw, are protected by a die 11 turned thereagainst.

When the tree trunk 5 is being cut, the die 11, when the working device 1 is being positioned against the tree trunk, has turned open, as the gripping members 2 and 3. When the tree trunk is pressed against the body 4 of the working device, the die is turned towards the tree trunk. The die then preferably moves on a plane which, according to the figures, is substantially congruent with the plane of motion of the cutting member or is substantially parallel therewith. In this manner, the die forces the cutting member 9 moving with respect to the working device to be pressed and cut through the tree trunk. When the cutting edge 10 according to the figures is used, the tree trunk is thus pressed and cut against the die. It can thus be said that the cutting member and the die co-operate interconnectedly, the cutting member and the die pressing against one another each time as a result of a closing movement of the die. In the embodiment according to the figures, the cutting member and the die are interconnected by means of a clamp-like arrangement.

As the collecting work continues, the tree trunks 5 collected into the working device 1 rest on the cutting member 9 which is equipped with a substantially even upper surface 12 and which continuously keeps protruding from underneath the working device. The cutting device is thus automatically arranged to support all tree trunks collected into the working device, as shown in Figure 2. Consequently, as opposed to what usually happens, the tree trunks are not allowed to move downwards while other trees are being gripped, wherefore repetitive unnecessary cutting of the same tree trunk is avoided.

When the tree trunks 5 to be delimbed are difficult to handle, when they are very tall, for instance, an entire bundle consisting of tree trunks may be cut by means of the present device into two or more shorter parts so as to make them more suitable for transportation or storage.

It is to be noted that e.g. the working device 1 turned into a horizontal position in accordance with Figure 6 and the cutting device 7 therein may be used in a manner known per se for moving and loading individual tree trunks 5 or bundles of trees, as a conventional forwarder grab. In this use, the cutting device 7 can be turned away from the cross-sectional area defined by the gripping members 2 and 3 in order to alleviate loading. In such a case, the die 11 of the cutting device is directed to be closed so as to protect the cutting device 9, in which case the die and the body 8 of the cutting device withdraw and move behind the body 4 of the working device, into hiding, due to the connecting device 6 in accordance with the arrangement.

In order to achieve an advantageous path, in the arrangement according to the present embodiment, a mounting axle formed by the connecting device 6 of the cutting device is arranged on a substantially congruent axle 13, together with a joint pin of other gripping members 3 provid ed on one side of the working device. Furthermore, such an implementation is advantageous in terms of simple manufacture and structure. Preferably, a friction element of the above-described kind is provided around this mounti ng axle, between the body 4 of the working device and the body 8 of the cutting device, although it is not necessary to use such an element. Hence, the cutting device 7 remains in the position into which a bundle of trees directed it. The amount of friction is set to be just enough for the cutting device to stay up e.g. in a loading position and thus out of the way of the loading. Such a joint structure also enables transfer of stresses acting on the structures on the path plane of the cutting member 9 to the actual working device 1 during cutting to be avoided efficiently.

The mutual movement between the cutting device 7 and the working device 1 can also be implemented by connecting means 6 other th an the mounting axle presented in the present drawings. Consequently, the cutting device can be arranged in the working device by means of at least one guide interconnecting the bodies of the working device and the cutting device. Such a guide may comprise a suitable solution known per se, such as a dovetail guide.

It is apparent to a person skilled in the art that as technology advances, the basic idea of the invention may be implemented in many different ways. The invention and its embodiments are thus not restricted to the above-described examples but may vary within the scope of the claims.

## Claims

1. An arrangement in a wood handling device, the wood handling device being constituted at least by a working device (1) and a cutting device (7), the cutting device comprising a body (8) provided with tree cutting means (9, 11) and means for arranging the cutting device in the working device provided in booms of a forestry machine, said cutting means (9, 11) comprising a cutting member (9) substantially rigidly arranged in the body (8) of the cutting device (7) and equipped with a substantially planar upper surface, as well as a die (11) arranged to be movable substantially on the plane of motion of the cutting member (9) or on a plane substantially parallel therewith, the working device comprising a body (4) and a set of gripping members (2, 3) for gripping one or more tree trunks (5), each tree trunk to be cut, forced by the die, being arranged to be directed onto the upper surface (12) provided in the cutting member so as to be supported thereby, **characterized in that**
the movements of the cutting member (9) of the cutting device (7) and the die (11) are reversely interconnected and, that
the cutting device (7) is arranged to be turnable relative the working device (1) by a connecting device (6) as to allow the working device and the cutting device with the cutting member (9) and die (11) thereof to be shifted substantially on a plane of motion of the tree trunk cutting means (9, 11), minimizing the forces directed towards the working device,
the movement of the cutting device (7) projecting outside the crosssectional area defined by the gripping members (2, 3) of the working device (1).

2. An arrangement as claimed in claim 1, **characterized in that** the connecting device (6) between the working device (1) and the cutting device (7) comprises a friction element arranged partly to resist the movement of the cutting device with respect to the working device.

3. An arrangement as claimed in claim 2, **characterized in that** the friction element is constituted by a friction element arranged between opposite outer surfaces provided in the working device (1) and the cutting device (7).

4. An arrangement as claimed in claim 1, 2 or 3, **characterized in that** the working device (1) comprises at least two joint pins provided in a direction parallel to a longitudinal axis in the body of the working device so as to receive at least two gripping members such that the connecting means (6) for arranging the cutting device in the working device constitute a mounting axle (13) congruent with one joint pin.

5. An arrangement as claimed in claim 1, 2 or 4, **characterized in that** the connecting means (6) for arranging the cutting device (7) in the working device (1) comprise at least one guide interconnecting the bodies of the working device and the cutting device.

6. An arrangement as claimed in claim 5, **characterized in that** the guide constituting the connecting means (6) comprises a dovetail guide.

7. An arrangement as claimed in any one of the preceding claims, **characterized in that** the cutting device (7) is arranged to be directed by an actuator such that the actuator enables the cutting device to be positioned with respect to the working device (1).

8. An arrangement as claimed in any one of claims 1 - 6, **characterized in that** the cutting means (9, 11) comprise a blade (9) substantially rigidly arranged in the body (8) of the cutting device (7), as well as a die (11) arranged to be movable on a plane of the blade in order to direct a tree trunk (5) against a cutting edge (10) provided in the blade.

9. An arrangement as claimed in any one of claims 1 - 6, **characterized in that** the cutting member (9) comprises a chainsaw.

## Patentansprüche

1. Anordnung in einer Holzhandhabungsvorrichtung, wobei die Holzhandhabungsvorrichtung wenigstens durch eine Arbeitsvorrichtung (1) und eine Schneidvorrichtung (7) gebildet ist, wobei die Schneidvorrichtung einen Körper (8) umfasst, der mit Baumschneidemitteln (9, 11) und Mitteln zum Anordnen der Schneidvorrichtung in der in Schwenkarmen einer Forstmaschine bereitgestellten Arbeitsvorrichtung versehen ist, wobei die Schneidemittel (9, 11) ein Schneidelement (9), das im Wesentlichen starr in dem Körper (8) der Schneidvorrichtung (7) angeordnet ist und mit einer im Wesentlichen flachen oberen Fläche ausgestattet ist, wie auch ein Unterwerkzeug (11), das so eingerichtet ist, dass es im Wesentlichen auf der Bewegungsebene des Schneidelements (9) oder einer Ebene, die im Wesentlichen parallel dazu verläuft, beweglich ist, umfassen, wobei die Arbeitsvorrichtung einen Körper (4) und einen Satz von Greifelementen (2, 3) zum Ergreifen eines oder mehrerer Baumstämme (5) umfasst, wobei jeder Baumstamm, der durch das Unterwerkzeug gezwungen geschnitten werden soll, so angeordnet wird, dass er so auf die obere Fläche (12), die in dem Schneidelement bereitgestellt ist, geführt wird, dass er dadurch gestützt wird, **dadurch gekennzeichnet, dass**
die Bewegungen des Schneidelements (9) der Schneidvorrichtung (7) und des Unterwerkzeugs (11) umgekehrt verbunden sind, und dass
die Schneidvorrichtung (7) so eingerichtet ist, dass sie durch eine Verbindungsvorrichtung (6) in Bezug auf die Arbeitsvorrichtung (1) drehbar ist, um der Arbeitsvorrichtung und der Schneidvorrichtung mit ihrem Schneidelement (9) und Unterwerkzeug (11) zu gestatten, im Wesentlichen auf einer Bewegungsebene der Baumstammschneidmittel (9, 11) verschoben zu werden, wobei die Kräfte, die zu der Arbeitsvorrichtung gerichtet sind, minimiert werden,
die Bewegung der Schneidvorrichtung (7), die nach außerhalb der Querschnittfläche vorspringt, durch die Greifelemente (2, 3) der Arbeitsvorrichtung (1) definiert wird.

2. Anordnung nach Anspruch 1, **dadurch gekennzeichnet, dass** die Verbindungsvorrichtung (6) zwischen der Arbeitsvorrichtung (1) und der Schneidvorrichtung (7) ein Reibungselement umfasst, das teilweise eingerichtet ist, um der Bewegung der Schneidvorrichtung in Bezug auf die Arbeitsvorrichtung zu widerstehen.

3. Anordnung nach Anspruch 2, **dadurch gekennzeichnet, dass** das Reibungselement durch ein Reibungselement gebildet ist, welches zwischen entgegengesetzten Außenflächen, die in der Arbeitsvorrichtung (1) und der Schneidvorrichtung (7) bereitgestellt sind, angeordnet ist.

4. Anordnung nach Anspruch 1, 2 oder 3, **dadurch gekennzeichnet, dass** die Arbeitsvorrichtung (1) wenigstens zwei Verbindungszapfen umfasst, die in einer Richtung, welche parallel zu einer Längsachse verläuft, in dem Körper der Arbeitsvorrichtung bereitgestellt sind, um wenigstens zwei Greifelemente so aufzunehmen, dass die Verbindungsmittel (6) zum Anordnen der Schneidvorrichtung in der Arbeitsvorrichtung eine Anbringungsachse (13) bilden, die mit einem Verbindungszapfen deckungsgleich ist.

5. Anordnung nach Anspruch 1, 2 oder 4, **dadurch gekennzeichnet, dass** die Verbindungsmittel (6) zum Anordnen der Schneidvorrichtung (7) in der Arbeitsvorrichtung (1) wenigstens eine Führung umfassen, die die Körper der Arbeitsvorrichtung und der Schneidvorrichtung verbindet.

6. Anordnung nach Anspruch 5, **dadurch gekennzeichnet, dass** die Führung, die die Verbindungsmittel (6) bildet, eine Schwalbenschwanzführung umfasst.

7. Anordnung nach einem der vorhergehenden Ansprüche, **dadurch gekennzeichnet, dass** die Schneidvorrichtung (7) so zur Führung durch einen Aktuator eingerichtet ist, dass der Aktuator ermöglicht, dass die Schneidvorrichtung in Bezug auf die Arbeitsvorrichtung (1) positioniert wird.

8. Anordnung nach einem der Ansprüche 1 bis 6, **dadurch gekennzeichnet, dass** die Schneidemittel (9, 11) eine Klinge (9), die im Wesentlichen starr in dem Körper (8) der Schneidvorrichtung (7) angeordnet ist, wie auch ein Unterwerkzeug (11), das so eingerichtet ist, dass es auf einer Ebene der Klinge beweglich ist, um einen Baumstamm (5) gegen eine an der Klinge bereitgestellte Schneidkante (10) zu führen, umfasst.

9. Anordnung nach einem der Ansprüche 1 bis 6, **dadurch gekennzeichnet, dass** das Schneidelement (9) eine Kettensäge umfasst.

## Revendications

1. Aménagement dans un dispositif de manipulation de bois, le dispositif de manipulation de bois étant constitué au moins par un dispositif de travail (1) et un dispositif de coupe (7), le dispositif de coupe comprenant un corps (8) pourvu de moyens de coupe d'arbre (9, 11) et de moyens d'aménagement du dispositif de coupe dans le dispositif de travail aménagé dans les flèches d'une machine forestière, lesdits moyens de coupe (9, 11) comprenant un élément de coupe (9) aménagé de manière sensiblement rigide dans le corps (8) du dispositif de coupe (7) et équipé d'une surface supérieure sensiblement plane ainsi que d'une matrice (11) aménagée pour pouvoir se déplacer sensiblement dans le plan de déplacement de l'élément de coupe (9) ou dans un plan sensiblement parallèle à celui-ci, le dispositif de travail comprenant un corps (4) et un ensemble d'éléments de préhension (2, 3) pour saisir un ou plusieurs troncs d'arbre (5), chaque tronc d'arbre à découper, forcé par la matrice, étant aménagé pour être dirigé sur la surface supérieure (12) ménagée dans l'élément de coupe de manière à être supporté par celui-ci, **caractérisé en ce que** :
les mouvements de l'élément de coupe (9) du dispositif de coupe (7) et de la matrice (11) sont interconnectés de manière inverse et
le dispositif de coupe (7) est aménagé pour pouvoir tourner par rapport au dispositif de travail (1) par un dispositif de liaison (6) de manière à permettre au dispositif de travail et au dispositif de coupe avec l'élément de coupe (9) et sa matrice (11) de se déplacer sensiblement dans le plan de déplacement des moyens de coupe de tronc d'arbre (9, 11) en minimisant les forces dirigées vers le dispositif de travail,
le mouvement du dispositif de coupe (7) dépassant à l'extérieur de la surface en coupe transversale définie par les éléments de préhension (2, 3) du dispositif de travail (1).

2. Aménagement selon la revendication 1, **caractérisé en ce que** le dispositif de liaison (6) entre le dispositif de travail (1) et le dispositif de coupe (7) comprend un élément de friction aménagé en partie pour résister au déplacement du dispositif de coupe par rapport au dispositif de travail.

3. Aménagement selon la revendication 2, **caractérisé en ce que** l'élément de friction est constitué par un élément de friction aménagé entre les surfaces externes opposées fournies dans le dispositif de travail (1) et le dispositif de coupe (7).

4. Aménagement selon la revendication 1, 2 ou 3, **caractérisé en ce que** le dispositif de travail (1) comprend au moins deux broches d'assemblage aménagées dans une direction parallèle à un axe longitudinal du corps du dispositif de travail de manière à recevoir au moins deux éléments de préhension tels que les moyens de liaison (6) pour aménager le dispositif de coupe dans le dispositif de travail constituent un axe de montage (13) coïncidant avec une broche d'assemblage.

5. Aménagement selon la revendication 1, 2 ou 4, **caractérisé en ce que** les moyens de liaison (6) pour aménager le dispositif de coupe (7) dans le dispositif de travail (1) comprennent au moins un guide interconnectant les corps du dispositif de travail et du dispositif de coupe.

6. Aménagement selon la revendication 5, **caractérisé en ce que** le guide constituant les moyens de liaison (6) comprend un guide en queue d'aronde.

7. Aménagement selon l'une quelconque des revendications précédentes, **caractérisé en ce que** le dispositif de coupe (7) est aménagé pour être dirigé par un actionneur de sorte que l'actionneur permette de positionner le dispositif de coupe par rapport au dispositif de travail (1).

8. Aménagement selon l'une quelconque des revendications 1 à 6, **caractérisé en ce que** les moyens de coupe (9, 11) comprennent une lame (9) aménagée de manière sensiblement rigide dans le corps (8) du dispositif de coupe (7) ainsi qu'une matrice (11) aménagée pour pouvoir être déplacée dans le plan de la lame afin de diriger un tronc d'arbre (5) contre une arête de coupe (10) ménagée dans la lame.

9. Aménagement selon l'une quelconque des revendications 1 à 6, **caractérisé en ce que** l'élément de coupe (9) comprend une scie à chaîne.
